# EUROPEAN PATENT APPLICATION

(11) **EP 4 518 365 A1**
(43) Date of publication of application: **05.03.2025**
(21) Application number: 24196727.2
(22) Date of filing: 27.08.2024
(51) Int. Cl.: H04W 4/06, H04W 4/80, H04W 4/08, H04W 72/0446, H04W 84/18

(54) **ENHANCED BLUETOOTH LOW ENERGY BROADCAST**

(30) Priority: 28.08.2023 US 202318457329
(71) Applicant: Avago Technologies International Sales Pte. Limited, Singapore 768923 (SG)
(72) Inventor: Xie, Guoxin, Rancho Santa Fe, 92067 (US); Ding, Shawn, San Diego, 92129 (US); Zhuang, Yuan, Rancho Santa Fe, 92067 (US)
(74) Representative: Bosch Jehle Patentanwaltsgesellschaft mbH

(57) **Abstract**

Novel communication techniques for Bluetooth LE devices. In some cases, a central device transmits broadcast messages, which can be received by one or more peripheral devices, which then transmit responses in turn. In an aspect, these techniques can condense multiple advertising/scan request/scan response packets into a single transmission window and/or multiple, contiguous receive windows for the central device and single transmit/single receive windows for each peripheral device.

## Description

This disclosure relates generally to wireless networking, and more specifically, to Bluetooth communications between a central device and peripheral devices.

The Bluetooth^{®} low energy standard (Bluetooth LE or BLE) establishes a relationship between a central device and one or more peripheral devices (also referred to as "peripherals"), in which the central device can establish connections with one or more peripheral devices. Prior to establishing a connection, Bluetooth LE employs a scan/advertise model, in which advertisers (generally peripherals) send advertisement packets on a fixed interval (the Advertising Interval). There are generally three modes of advertising: a non-connectable, non-scannable mode, a connectable, scannable mode, and a periodic scan/advertise mode.

In the non-connectable, non-scannable mode, advertisers send advertisement packets on a primary advertising channel. BLE, however, provides no automatic repeat query (ARQ) mechanism built in. The advertiser has to constantly broadcast the same data for a long time. For example, when a phone as a central device needs to collect data from a peripheral (such as temperature sensor or a heart rate monitor), the phone needs to stay constantly in BLE scan mode. When there are many peripherals, the central device's scan duty cycle will increase greatly in order to get necessary data from all peripherals. There are only three primary advertising channels, however. The more peripherals, the higher the chance of channel collision. As a result, the advertising for the same packet increases and the scan duty cycle grows. This exacerbates radio frequency (RF) pollution, and in the worst case, no packet can ever be received. The current technique therefore requires more power and airtime than necessary, decreasing efficiency and battery life.

In the connectable/scannable advertising mode, each advertiser/scanner pair has to be paired and goes through the same protocol. For example, if a phone as central device wants to actively inform the peripherals that it has gotten data from them, it must send a scan request or connection request to a particular peripheral, and the peripheral has to send a scan response back if legacy advertise/scan model is used, or scan/connection response back if extended advertise/scan model is used. The acknowledgements using connection/scan request/response consume significant unnecessary time and bandwidth, further decreasing efficiency and battery life.

In the periodic advertise/scan mode, the advertiser can send advertising on secondary advertising channels. Again, however BLE provides no ARQ mechanism, so the advertiser has to periodically broadcast the data packets. The Link Layer of the advertising device must repeat the last advertising data sent by the Host of the advertising device until it receives new advertising data: the AUX_SYNC_IND protocol data units (PDU) are continuously sent until the Host directs the Link Layer to terminate the periodic advertising train. In addition to the discussed issues above, this technique offers low service quality, especially when the link quality is not good.

Further, BLE offers no security mechanisms in any of these modes.

Consequently, there is a need for an enhanced advertising technique that can address some or all of these issues.

According to an aspect, a wireless system is provided, comprising:
a central device, comprising:
   circuitry to transmit, on a repeating, fixed schedule, a broadcast message for reception by a plurality of peripheral devices, the repeating, fixed schedule comprising a central communication window for the central device to transmit and a plurality of peripheral communication windows for the plurality of peripheral devices to transmit; and
   circuitry to receive, during the plurality of peripheral communication windows, response messages from one or more of the plurality of peripheral devices according to the repeating, fixed schedule; and
the plurality of peripheral devices, each of the peripheral devices comprising:
   circuitry to listen for the broadcast message during the central communication window;
   circuitry to receive the broadcast message;
   circuitry to extract a sub-message from the broadcast message.
   circuitry to determine whether a message should be transmitted in response to the broadcast message; and
   if a message should be transmitted in response to the broadcast message, circuitry to transmit the message during a peripheral communication window assigned to that peripheral device.

According to an aspect, a device is provided, comprising:
circuitry to transmit, on a repeating, fixed schedule, a broadcast message for reception by a plurality of peripheral devices, the repeating, fixed schedule comprising a central communication window for the device to transmit and a plurality of peripheral communication windows for the plurality of peripheral devices to transmit; and
circuitry to receive, during the plurality of peripheral communication windows, response messages from one or more of the plurality of peripheral devices.

Advantageously, the device further comprises circuitry to transmit the broadcast message using Bluetooth LE.

Advantageously, the central communication window and each of the plurality of peripheral communication windows have an identical length.

Advantageously, the broadcast message comprises a plurality of sub-messages, the plurality of sub-messages comprising a first sub-message for reception by a first peripheral device and a second sub-message for reception by a second peripheral device.

Advantageously, the plurality of peripheral devices is a predetermined group of peripheral devices.

Advantageously, the device further comprises circuitry to remove a peripheral device from the predetermined group of peripheral devices, in response to an event selected from a group consisting of:
the device receiving a message from the peripheral device requesting removal from the group; or
the device failing to receive a message from the peripheral device for a specified number of cycles of the repeating, fixed schedule.

Advantageously, the device further comprises circuitry to modify the repeating, fixed schedule to remove, from the repeating, fixed schedule, a peripheral communication window assigned to the peripheral device removed from the group.

Advantageously, the device further comprises:
circuitry to encrypt the broadcast message with a first security key distributed to the group of peripheral devices.

Advantageously:
the broadcast message comprises a plurality of sub-messages, the plurality of sub-messages comprising a first sub-message for reception by a first peripheral device and a second sub-message for reception by a second peripheral device;
the device further comprises:
   circuitry to encrypt the first sub-message with a second security key specific to the first peripheral device; and
   circuitry to encrypt the second sub-message with a third security key specific to the second peripheral device.

Advantageously, the device further comprises circuitry to create the predetermined group of peripheral devices .

Advantageously, the group is created based on a prior connection link between the central device and each of the plurality of peripheral devices.

Advantageously, the device further comprises circuitry to establish one or more communication parameters for the group of peripheral devices, the one or more communication parameters selected from the group consisting of:
a timing of each of the communication windows in the repeating, fixed schedule;
an order of the communication windows in the repeating, fixed schedule;
a maximum size of messages transmitted by the peripheral devices;
a shared security key for the group of peripheral devices; or
one or more individual security keys specific to individual peripheral devices.

Advantageously, each of the communication windows in the repeating, fixed schedule is defined by a fixed length of time.

Advantageously, the fixed length of time is a multiple of a Bluetooth half slot boundary.

Advantageously, each of the communication windows in the repeating, fixed schedule is defined by a message payload size.

According to an aspect, a device is provided, comprising:
circuitry to listen for a broadcast message from a central device according to a repeating, fixed schedule, the repeating, fixed schedule comprising a central communication window for a central device and a plurality of peripheral communication windows for a plurality of peripheral devices;
circuitry to receive the broadcast message during the central communication window;
circuitry to extract a sub-message from the broadcast message;
circuitry to determine whether a message should be transmitted in response to the broadcast message; and
if a message should be transmitted for reception by the central device, circuitry to transmit the message during a specific one of the peripheral communication windows, wherein the specific one of the communication windows is assigned to the device.

Advantageously, the device further comprises
circuitry to stop receiving for a remainder of the central communication window after the first sub-message has been extracted; and
circuitry to remain idle until a peripheral communication window assigned to the device.

Advantageously, the device further comprises:
circuitry to remain idle during a first portion of the central communication window; and
circuitry to begin receiving the broadcast message during a second portion of the central communication window, the second portion corresponding to the sub-message.

Advantageously, the message comprises a plurality of sub-messages, the device further comprising:
circuitry to decrypt the message using a first security key common to a group of devices; and
circuitry to decrypt the sub-message using a second security specific to the device.

### Brief Description of the Drawings

Fig. 1 is a block diagram illustrating a Bluetooth LE group comprising a central device and plurality of peripheral devices, in accordance with some embodiments.
Fig. 2A is block diagram illustrating communication windows for a Bluetooth LE group comprising a central device and a plurality of peripheral devices, in accordance with some embodiments.
Fig. 2B is a block diagram illustrating two cycles of a repeating, fixed schedule.
Fig. 3 is a block diagram illustrating communication windows for a Bluetooth LE group comprising a central device and a plurality of peripheral devices, in accordance with some embodiments.
Fig. 4 is a flow diagram illustrating a method of communicating within a Bluetooth LE group comprising a central device and a plurality of peripheral devices, in accordance with some embodiments.
Fig. 5 is a block diagram illustrating example components of a device in accordance with some embodiments.

### Detailed Description

Various embodiments disclose novel communication techniques for Bluetooth LE devices. In certain embodiments, a central device transmits broadcast messages, which can be received by one or more peripheral devices, which then transmit responses in turn. Certain embodiments can provide for reliable data transfer between the central device and peripheral devices because peripheral responses (which can serve as ACK or acknowledgement messages) can enable reliable multicast functionality. Moreover, the central device can acknowledge response messages from the peripherals in the following broadcast message, if desired.

Some embodiments also provide more efficient data transfer between the central device and the peripherals by condensing multiple advertising/scan request/scan response packets into a single transmission window and multiple, contiguous receive windows for the central device and single transmit/single receive windows for each peripheral device. This can reduce overall airtime for that group of devices and reduce power consumption for the central device and the peripheral devices. This is especially advantageous when multiple peripheral devices need to receive the same data, but do not need to send data back very often, such as when multiple headsets listen to the same audio stream from the central device. Moreover, in some cases, a peripheral device can transmit an acknowledgement that indicates to the central device that the peripheral should not be polled at certain times, which can reduce airtime when polling is unnecessary, further reducing power consumption for both the central device and the and peripheral device.

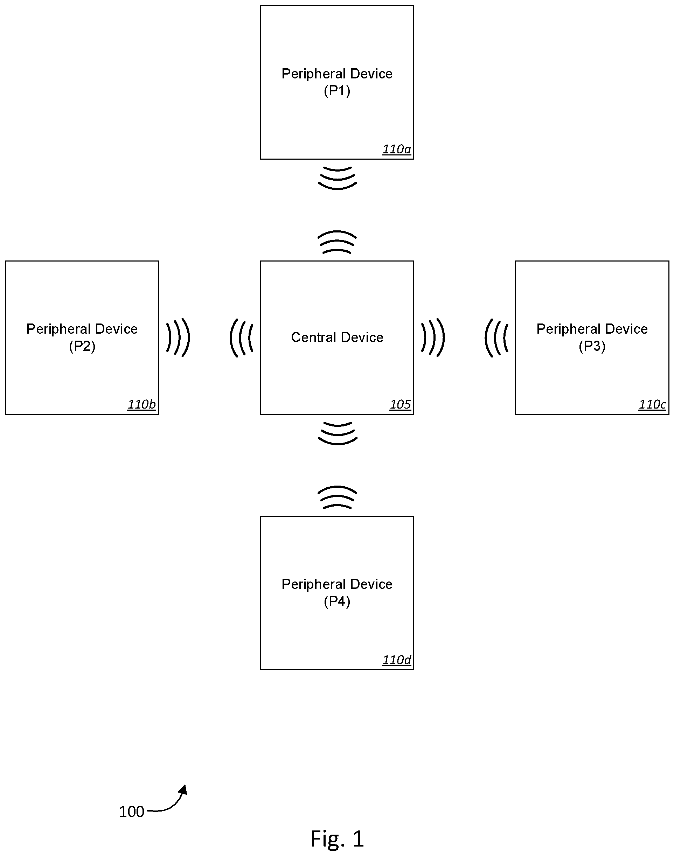

Fig. 1 illustrates a system 100 comprising a central device 105 and a plurality of peripheral devices 110. While the Fig. 1 illustrates four peripherals 110, various embodiments can comprise as many peripherals 110 as the central device 105 can support. As used herein, the term "central device" means a device performing the role of a central device (also known as a master device) that performs the Central Role according to the Bluetooth Core Specification (BCS). Non-limiting examples of such devices can include personal computers, wireless phones, tablet computers, smart watches, and the like. Similarly, the term "peripheral device" means a device performing the Peripheral role according to the BCS. Non-limiting examples of such devices include sensors (temperature sensors, heart rate sensors, etc.), IoT devices (thermostats, doorbells, cameras, and/or the like), audio devices (headphones, speakers, etc.) and the like. In conventional BLE techniques, a central device typically scans for advertisements and a peripheral device transmits advertisements. It should be noted that a single device can be a central device in some circumstances and a peripheral device in other circumstances. For instance, modern versions of the Apple iPhone^{®} can operate as either a central device or a peripheral device.

In accordance with some embodiments, the central device 105 sends a single broadcast packet to some or all of the peripherals 110 in an established group, referred to herein as the "Acknowledged Secured Broadcast Group" (ASBG or group). In an aspect of some embodiments, this broadcast packet can be considered analogous to an advertising packet from a peripheral in a conventional BLE system. In another aspect, the group can be formed by a prior BLE connection link between the central device and related peripheral devices.

The central device 105 might specify the group communication parameters, such as transmit/receive timing (e.g., in terms of communication window time boundaries and/or payload sizes), packet sizes, peripheral sequence (e.g., in terms of sequence of sub-messages in a broadcast message, sequence of communication windows for each peripheral to transmit, etc.), and/or the like. The packet sent by the central device 105 can encapsulate many different packets directed to different peripherals 110. Once a peripheral 110 receives this capsulated advertising packet, it can extract the information intended for it and close the receive window early desired. If the intended information/data is located closer to the end of the capsulated packet, the peripheral 110 may enter to an idle state and reopen the receiving window at the appropriate time to save power.

In some embodiments, the peripherals 110 respond to the central device 105. The central device 110 can poll individual peripherals 110 at different pre-negotiated time slot. All peripherals 110 might send back data using a pre-negotiated packet format. In some embodiments, a peripheral 110 can use the same packet type with zero-length as an acknowledgement if it has nothing to send back to the central device 105. In an aspect, each peripheral 110 can remain in an idle state during the response phase until its communication window occurs to respond to the central device 105. The communication windows (timeslots) for the central device 105 and the peripherals 110 to transmit might be established according to a repeating, fixed schedule. A peripheral 110 can maintain an idle state after receiving the broadcast packet until the scheduled time for the peripheral 110 to respond.

A fixed, repeating schedule, as that term is used herein, means any schedule governing communications between wireless devices (e.g., BLE devices) in which each participating device has a fixed window in which to transmit during each cycle of the schedule, and in which the cycles of the schedule repeat until one of the devices provides an indication that the schedule or its windows should change. In some embodiments, a repeating, fixed schedule can reserve a specific length or amount of time for each device to transmit; these specific lengths or amounts of time might all be equal, or they might not.

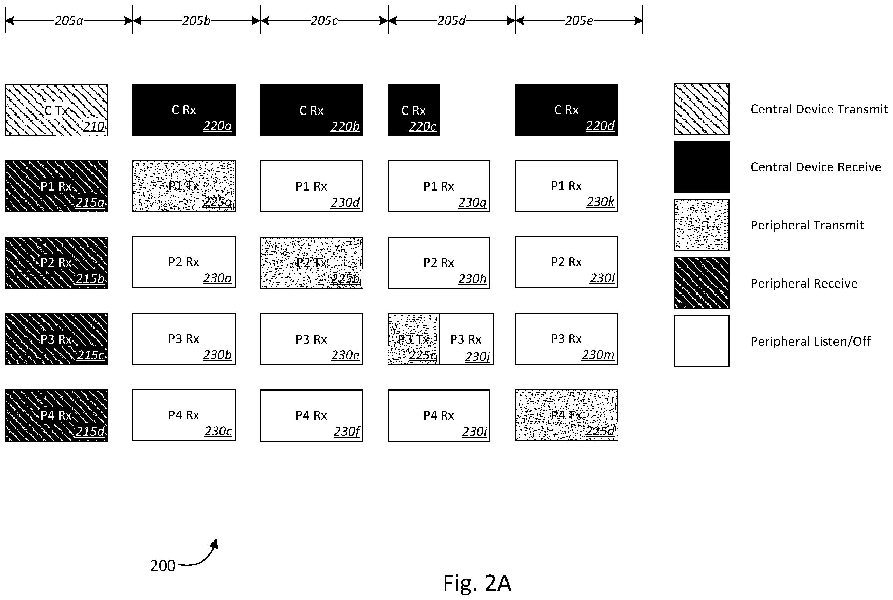

Fig. 2A is a timing diagram of one full cycle of a repeating, fixed schedule 200 that is defined by a fixed length of time, according to one set of embodiments. A schedule defined by a fixed length of time is a schedule in which each communication window is defined by a particular increment of time (which might be the same for all windows or different for different windows). In this schedule, all of the communication windows are of the same length. The schedule 200 comprises a plurality of communication windows 205, each having an identical length of time. In some embodiments, the length of each window 205 is a multiple of the standard Bluetooth half slot boundary (312.5µs), e.g., 312.5µs, 625µs, etc. In other embodiments a different amount of time can be used as the length of each window 205. While the schedule of Fig. 2A includes five communication windows 205a-e, one each for the central device 105 and four peripherals 110 to transmit, various embodiments can include communication windows 205 for as many peripherals as necessary, using techniques like those illustrated. In some aspects, the first window 205a can be described as a "central communication window" because that window is reserved for the central device 105 to transmit. The remaining communication windows 205b-205e can be described as "peripheral communication windows" because each of those windows 205b-205e is reserved for one of the peripherals 110 to transmit.

More specifically, in some embodiments, during the first communication window 205a, the central device 105 transmits 210 a broadcast packet 210. All of the peripherals 110 in the group receive 215 the broadcast packet. In some embodiments, each peripheral processes the broadcast packet as described below. During the subsequent windows 205b-205e, the central device 105 receives 220 packets from the peripherals 110, and the peripheral devices 110 transmit 225a in response to the broadcast packet. Specifically, during the second window 205b, peripheral P1 110a transmits 225d, while the remaining peripherals 110b-110 remain in listen mode or have their radios off 230a-230c. Likewise, during the third window 205c, peripheral P2 110b transmits 225b, while the other peripherals 110a, 110c, 110d are in listen mode or have radios off 230d-230f.

During the fourth window 205d, peripheral P3 110c transmits 225c, while the other peripherals 110a, 110b, 110d are in listen mode or have radios off. Notably, peripheral P3 110c does not require the entire window to transmit. Nonetheless, because of the fixed length of the window 205d, all other peripherals 110a, 110b, 110d remain in listen/off mode 230g-230i for the entire length of the window 205d. After transmitting 225c, peripheral P3 110c might enter listen/off mode 230j as well. Then, at the beginning of the fifth window, peripheral P4 110d transmits 225d, while the other peripherals 110a-110c are in listen/off mode 230k-230m. After the fifth window 205e, the repeating, fixed schedule 200 repeats with a subsequent cycle.

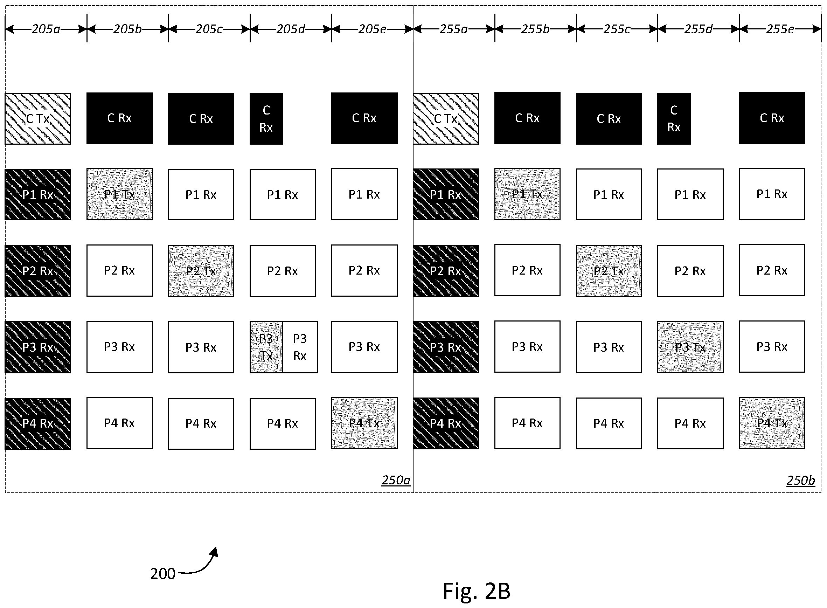

As used herein, the term "cycle" refers to a single period or iteration of a fixed, repeating schedule. For example, Fig. 2B illustrates a timing diagram showing two full cycles 250a, 250b of the repeating, fixed schedule of Fig. 2A. Thus, the first cycle 250a includes communication windows 205a-205e, while the second cycle 250b includes communication windows 255a-255e, which are identical to windows 205a-205e of the first cycle 250a. As noted below, these cycles repeat until a device (typically the central device) modifies the repeating, fixed schedule.

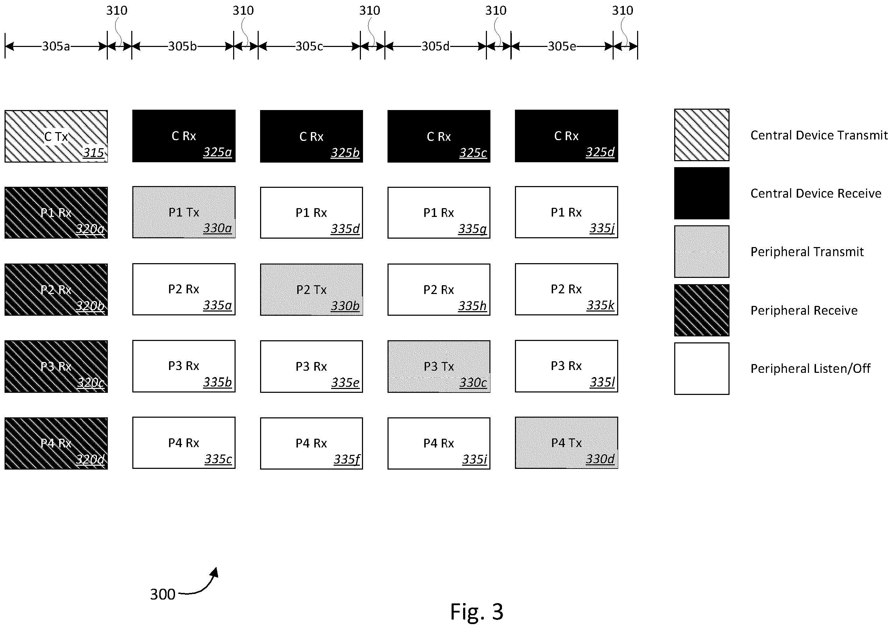

In other embodiments, rather than a fixed length of time, the central device 105 might specify a fixed schedule defined by a fixed payload size for each packet sent by the devices 105, 110. As an example, Fig. 3 illustrates a repeating, fixed schedule 300 that employs a fixed payload size 305, followed by an interframe space. The fixed payload size might be a defined maximum (and/or exact) length of the message payload (which might or might not, depending on how the payload is defined, include all headers and/or trailers), and in a fixed payload schedule, each device is allotted a sufficient communication window to transmit that payload. The window might end when the central device has received the number of bits or bytes specified as the fixed payload. In some cases, the interframe space can be T_IFS, as defined in the BCS (e.g., 150µs in Bluetooth 4 and Bluetooth 5.). Other than the difference in timing mechanisms, the schedule 300 of Fig. 3 operates similarly to the schedule 200 of Fig. 2A, except that the central device 105 and each peripheral 110 transmits a packet of a fixed length specified by the central device 105, rather than transmitting for a maximum duration specified by the central device 105. This means, for example, that peripheral P3 110c, in this case, transmits a full packet of the fixed length, rather than merely transmitting for a portion of a fixed time-based window (such as the window 205d of Fig. 2A), even if it does not require the entire packet for the response.

Advantageously, some embodiments provide security for the broadcast packets and the response packets. For example, a group-wide security key can be distributed by the central device 105 when establishing the group. This key can be used to encrypt/decrypt the broadcast packet and/or the response packets. In some cases, the central device 105 might distribute to one or more individual peripherals (e.g., peripheral 110a) a member security key specific to that individual peripheral 110a, and/or might distribute a sub-group security key to some, but not all, peripheral members of the group. As described below, embodiments therefore can provide multi-layer security by first encrypting a packet for individual peripherals with the member and/or sub-group key of the peripheral(s) 110 to which that packet is directed, encapsulating a plurality of such packets into a single, encapsulated packet, and/or then encrypting the entire capsulated packet with the group security key. As used herein, the term "security key" means any value or group of characters that can be used to encrypt, authenticate, and/or otherwise secure a message. In some embodiments, for example, the security key can be a counter with Advanced Encryption Standard cypher block chaining message authentication code mode (AES CCM) key or keystream generated in accordance with the BCS.

In another aspect, some embodiments allow for a configurable group size. For example, when one or more peripherals 110 leave the group (e.g., a peripheral transmits a removal request, is turned off, is disconnected, or is out of range of the central device 105), the central device 105 can rearrange the group configuration and/or the repeating, fixed schedule to be more airtime effective, for example by removing the communication window for that peripheral 110 to transmit. In some cases, the central device 105 might not modify the schedule but infer a NACK (no acknowledgment) message during that peripheral's 110 transmit window.

### Exemplary Embodiments

Certain exemplary embodiments are described below. Each of the described embodiments can be implemented separately or in any combination, as would be appreciated by one skilled in the art. Thus, no single embodiment or combination of embodiments should be considered limiting.

One set of embodiments provides devices. In some embodiments, devices can include semiconductor chips, systems on a chip (SoC) and/or the like, comprising logic (e.g., circuitry) capable of performing operations described herein. For example, some embodiments comprise a Bluetooth SoC, a Wi-Fi/BLE combination SoC, and/or the like. (referred to herein as a "Bluetooth subsystem"). Some Bluetooth subsystems can include several BLE functions such as medium access control layer (MAC), physical media layer (PHY) and radio frequency (RF) functions and/or the entire profile, application, and/or Bluetooth (and, optionally, Wi-Fi) protocol stacks. Other embodiments an include Bluetooth user devices, such as personal computers, wireless phones, headphones, sensors, smart watches, and/or the like. Such Bluetooth user devices can comprise the chips, SoCs, etc. described above.

An exemplary device in accordance with some embodiments can function as a central device. Such a device might comprise circuitry to transmit, *e.g*., on a repeating, fixed schedule, a broadcast message for reception by a plurality of peripheral devices. As used herein, the term "message" means any communication from one device to one or more other devices; an example of such a message can include, without limitation, Bluetooth packets and/or or protocol data units (PDU), or streams thereof. In many cases, therefore, a message might comprise a BLE packet. As used herein, the term "broadcast message" means any message that is transmitted by one device to be received by a plurality of other devices.

In some embodiments, a device (*e.g*., a central device) can encapsulate a plurality of sub-messages (*e.g.*, one packet for each device receiving a broadcast message, or one packet for a subset of the receiving devices, and other packet(s) for other receiving devices) into a single, capsulated message. In such cases, the capsulated message might be referred to herein as the message, and the plurality of encapsulated messages are referred to herein as "sub-messages." Generally, a central device might send a broadcast message to a group of peripherals, and the broadcast message might include sub-messages for one or more individual peripherals and/or sub-groups of peripherals. In other cases, a peripheral might send a broadcast message that operates in similar fashion to other peripherals and/or the central device.

In some embodiments, the broadcast message is transmitted using BLE. In some cases, the repeating, fixed schedule comprises a central communication window for the device to transmit and a plurality of peripheral communication windows for the plurality of peripheral devices to transmit. Merely by way of example, such communication windows can be similar to the communication windows 205 and 305 described in relation to Figs. 2A and 3 above. In some embodiments, each of the communication windows in the repeating, fixed schedule is defined by a fixed length of time, which might be a multiple of a Bluetooth half slot boundary. Alternatively and/or additionally, each of the communication windows in the repeating, fixed schedule could be defined by a message payload size.

The device might further comprise circuitry to receive one or more response messages from one or more of the plurality of peripheral devices. As used herein, the term "response message" means any message sent by a peripheral to another device, as described in further detail herein. In some embodiments, a response message can be transmitted from a peripheral device to a central device, in response to a broadcast message from the central device. In some cases, these response messages are received during the plurality of peripheral communication windows, and/or according to the repeating, fixed schedule.

In accordance with certain embodiments, the broadcast message comprises a plurality of sub-messages, which can comprise a first sub-message for reception by a first peripheral device and a second sub-message for reception by a second peripheral device. The plurality of peripheral devices might be a predetermined group of peripheral devices, and/or the device might comprise circuitry to create the predetermined group of peripheral devices, perhaps based on a prior connection link between the central device and each of the plurality of peripheral devices. A prior connection link can be any relationship between two devices that evidences a trust relationship between the two devices; one example of a prior connection link is if two devices are paired. In some cases, the device comprises circuitry to establish one or more communication parameters for the group of peripheral devices. Communication parameters can include, *inter alia,* any settings or values that facilitate or control communications among the group (*e.g.*, between the central device and peripherals and/or among peripherals themselves). The communication parameters can include a timing of each of the communication windows in the repeating, fixed schedule; an order of the communication windows in the repeating, fixed schedule; a maximum size of messages transmitted by the peripheral devices; a shared security key for the group of peripheral devices; one or more individual security keys specific to individual peripheral devices, and/or the like, to name a few examples.

In some embodiments, the device might comprise circuitry to remove a peripheral device from the predetermined group of peripheral devices under certain conditions. For example, when the device receiving a message from the peripheral device requesting removal from the group or the device fails to receive a message from the peripheral device for a specified number of cycles of the repeating, fixed schedule, the device might remove that peripheral device from the group. The device might further comprise circuitry to modify the repeating, fixed schedule to remove, from the repeating, fixed schedule, a peripheral communication window assigned to the peripheral device removed from the group.

The device might include circuitry to encrypt the broadcast message with a first security key (*e.g*., a group security key) distributed to the group of peripheral devices. The device could also include circuitry to encrypt the first sub-message with a second security key (*e.g*., a member security key) specific to the first peripheral device and/or and circuitry to encrypt the second sub-message with a third security key (*e.g.,* another member security key) specific to the second peripheral device.

An exemplary device in accordance with another set of embodiments might function as a peripheral device. Such a device might comprise circuitry to listen for a broadcast message from a central device according to a repeating, fixed schedule. The repeating, fixed schedule might comprise a central communication window for a central device and a plurality of peripheral communication windows for a plurality of peripheral devices. The device might further comprise circuitry to receive the broadcast message during the central window, and/or circuitry to extract a sub-message from the broadcast message. The device might further comprise circuitry to determine whether a message should be transmitted in response to the broadcast message. If a message should be transmitted for reception by the central device, the device might include circuitry to transmit the message during a peripheral communication window assigned to the device.

The device might also include circuitry to stop receiving for a remainder of the central communication window after the sub-message has been extracted, and/or circuitry to remain idle until a peripheral communication window assigned to the device. Alternatively and/or additionally, the device might comprise circuitry to remain idle during a first portion of the central communication window, circuitry to begin receiving the broadcast message during a second portion of the central communication window corresponding to the sub-message. In some cases, the device might include circuitry to decrypt the message using, *e.g*., a group security key; and circuitry to decrypt the sub-message using *e.g*., a member security specific to the device, a subgroup security key specific to a subgroup of members of the group, etc.).

Another set of embodiments can include a wireless system comprising a central device and one or more peripheral devices. These devices can be similar to the exemplary devices described above. For instance, the central device might comprise circuitry to transmit, e.g., on a repeating, fixed schedule, a broadcast message for reception by a plurality of peripheral devices and/or to receive response messages from one or more of the plurality of peripheral devices according to the repeating, fixed schedule.

Each of the peripheral devices might comprise circuitry to listen for the broadcast message during the central communication window and/or circuitry to receive the broadcast message. The peripheral device might also include circuitry to determine whether the broadcast message includes content specific to that peripheral device and/or circuitry to determine whether a message should be transmitted for reception by the central device. If a message should be transmitted for reception by the central device, the peripheral device might comprise circuitry to transmit the message during a peripheral communication window assigned to that peripheral device.

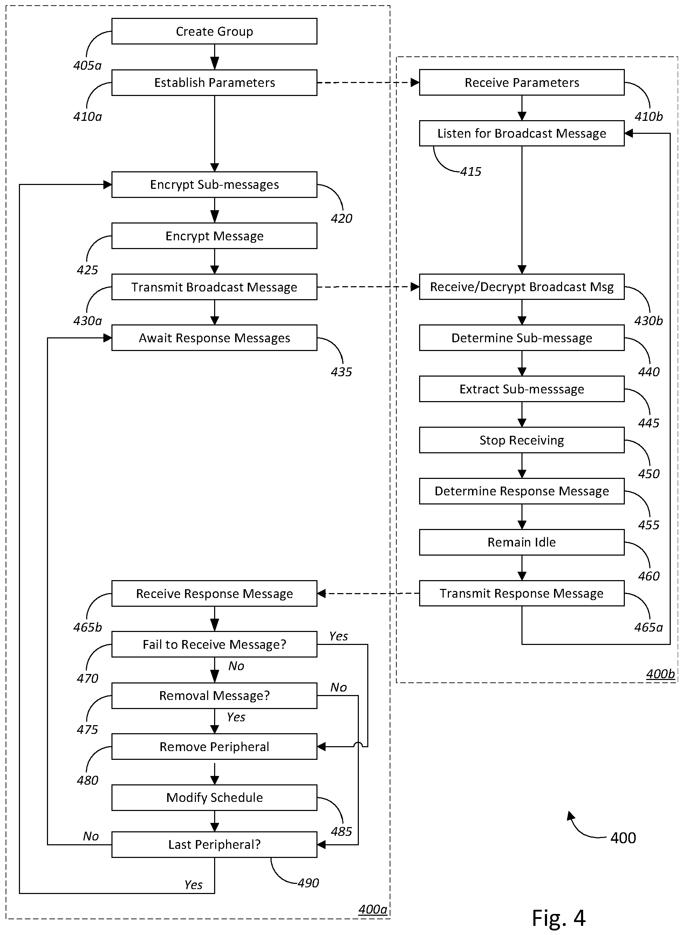

Another set of embodiments provides methods, including without limitation methods including operations performed by the circuitry described herein and/or in accordance with various embodiments. Fig. 4 illustrates an exemplary method 400, which includes a sub-method 400a, which might be performed by a first device and a sub-method 400b performed by a second device. In some embodiments, the sub-method 400b might be performed by a plurality of second devices. For illustrative purposes, the first device is exemplified by a central device and the second device is exemplified by a peripheral device, but some embodiments are not so limited.

At block 405, the central device creates a group. In some embodiments, one aspect of creating a group can comprise the central device identifying peripheral devices that have previously paired and/or connected with the central device, and/or identifying a subset (or the whole set) of those devices that are currently turned on and/or in range. Merely by way of example, the central device might scan for peripheral devices. In some embodiments creating a group can also include the central device informing the peripherals in the group that they have been added to the group.

At block 410a, the central device establishes communication parameters for the group. Establishing parameters can include setting communication parameters internally at the central device, and/or communicating with one or more peripherals to specify those parameters for the peripherals. As noted above, these parameters can include, *inter alia,* any settings or values that facilitate or control communications among the group (*e.g*., between the central device and peripherals and/or among peripherals themselves).

In some embodiments, the central device might create the group first (optionally notifying the peripherals at that time) and later establish the parameters (and notify the peripherals at that time). In other embodiments, the operations of creating the group and establishing parameters for the group can be integrated into a single operation and/or performed in parallel. In some embodiments, the central device might notify the peripherals of their membership in the group as well as specify the established parameters in a single communication.

At block 410b, the peripheral receives the established parameters. As noted above, there are different ways in which these parameters can be communicated by the central device. At block 415, the peripheral listens for a broadcast message. This can comprise entering a listen mode, entering an idle and/or off mode and waking periodically to listen, etc. For example, the peripheral might enter an idle state until a communication window (*e.g*., the first communication window 210, 315 of Fig. 2A or Fig. 3 above) when the central device is scheduled to transmit. In some cases, if the central device has specified a particular portion of the window for the peripheral device to receive, for example, according to an order of sub-messages specified by the central device, the peripheral might enter listen mode only during that portion of the window.

The central device then prepares a broadcast message, which, as noted above, can comprise a plurality of sub-messages. In some embodiments, the central device might encrypt each of the sub-messages with a security key specific to one or more of a plurality of peripherals, *e.g*., a member key and/or a sub-group key (block 420). The central device might then encapsulate the sub-messages into a broadcast message, and/or encrypt the broadcast message with a group security key common to the group of peripherals (block 425), as described above. These operations might be governed by the parameters specified by the central device. For example, encryption of the sub-messages might use peripheral-specific member or sub-group keys established by the device and/or encryption of the capsulated broadcast message might use the common group key established by the central device. Alternatively, and/or additionally, the sub-messages might be encapsulated in an order specified by a parameter established by the central device.

At block 430a, the central device transmits the broadcast message. In some embodiments, the broadcast message is transmitted using the parameters the central device specified for the group. For example, the central device might broadcast during a communication window (*e.g*., communication windows 210 or 315, described above) and at block 430b, the peripheral receives the broadcast message and/or decrypts the broadcast message with the group security key. In an aspect, the peripheral might receive the message during a particular communication window (*e.g*., the first window 205a or 305a of Fig. 2A or Fig. 3), when the central device is scheduled to transmit.

At block 435, the central device awaits response messages in response to the broadcast message. This operation can include going into a listen or idle mode until the end of the current communication window, when the central device begins to receive (block 465b), as discussed below, during the subsequent communication window.

In some cases, the peripheral might receive the entire broadcast message. In other cases, the peripheral might begin receiving only during a specified portion of the communication window, as noted above. In any case, at block 440, the peripheral might determine whether the broadcast message includes a sub-message for the peripheral (for example, if one of the sub-messages has a header directed to that peripheral and/or is in a specified location in the message). If so, the peripheral can extract and/or decrypt the sub-message (block 445). For example, the peripheral might decrypt the sub-message with a member key specific to the peripheral and/or a sub-group key, as noted above. In some embodiments, the peripheral might stop receiving after it has extracted the sub-message, even if the broadcast message and/or the communication window for the central device to transmit has not ended.

At block 455, the peripheral might determine whether a message should be sent in response to the broadcast message. For instance, the peripheral might determine that it should send a scan response message in response to the broadcast and/or an acknowledgement (ACK) message, and/or any other applicable message. In some cases, for example, the peripheral might determine that it should send a message (*e.g*., an ACK message) using the format specified by the parameters; this message might have zero length, which is simply an acknowledgement, or it can include additional data, which can serve as a response message.

At block 460, the peripheral remains idle until the communication window for the peripheral to transmit. For example, if the peripheral is P2 in the example of Fig. 2A or Fig. 3, it might wait until window 205b or 305b to begin transmitting the response.

At block 465a, the peripheral transmits the response message, if necessary. In some cases, the peripheral might encrypt the response message with the group security key, a sub-group key, and/or the member security key for that peripheral before transmitting. After transmitting, the peripheral can enter a listening or idle mode, and sub-method 400b returns to block 415 (for that particular peripheral).

At block 465b, the central device receives the response message during the communication window for the peripheral to transmit (e.g., 205b, 305b). If the central device fails to receive a message from the peripheral (block 470) after a specified number of cycles of the repeating, fixed schedule, the central device might conclude that the peripheral has become unavailable (*e.g*., turned off, out of range, etc.). If so, or if the received message requests removal of the peripheral from the group (block 475), the central device removes the peripheral from the group (block 480). Otherwise, the central device continues to block 490, discussed below.

If the central device has removed the peripheral from the group, the central device might then modify the repeating, fixed schedule to remove the communication window for the peripheral (block 485), *e.g*., in the case of the peripheral in this example, window 205b or 310b. If so, the central device might transmit new parameters to the remaining group, *e.g*., as described above, including a new fixed, repeating schedule that might omit window 205b or 305b and proceed directly from window 205a or 305a to window 205c or 305c. In this way, the central device can improve the efficiency of communications among the group.

If the central device determines the group has any further communication windows for other peripherals to transmit, process 400a returns to block 435, wherein the central device awaiting the next response message (block 435), *e.g*., until the end of the current communication window. This would be the case in the example discussed here, where the current communication window is window 205b or 305b for peripheral P2, where the central device would await the beginning of window 205c or 305c and begin receiving from peripheral P3.

If not (*e.g*., if the transmitting peripheral had been P4), the cycle ends at the end of the current communication window (*e.g*., 205e, 305e), and the process returns to block 420, where the central device begins to prepare and transmit another broadcast message during its own communication window. This broadcast window might include any sub-messages requested by any of the peripherals, such as a scan response (if the peripheral had transmitted a scan request).

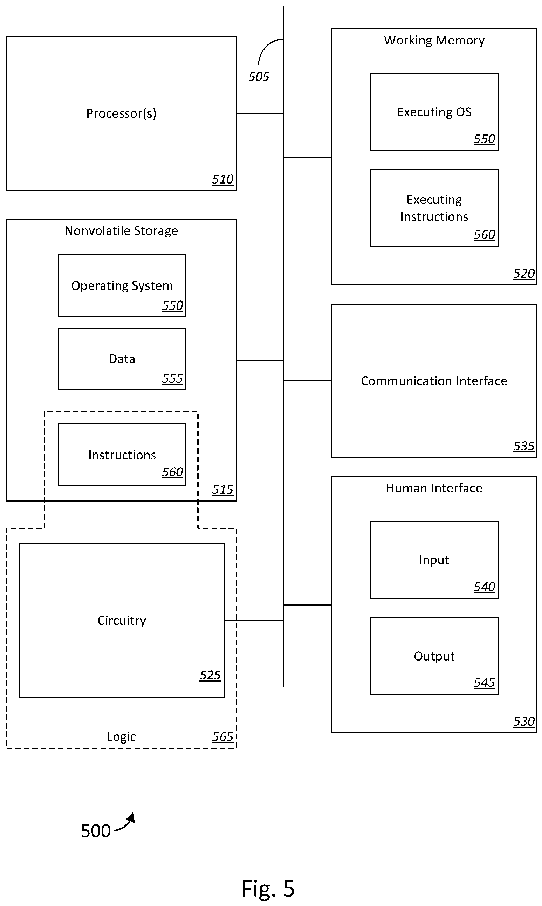

Fig. 5 is a block diagram illustrating an example of a device 500, which can function as described herein, including without limitation serving as a device, a Bluetooth user device, a Bluetooth subsystem on a Bluetooth user device, a computer system (or a component of any of these) in accordance with various embodiments, and/or performing some or all operations of the methods described herein. No component shown in Fig. 5 should be considered necessary or required by each embodiment. For example, many embodiments may not include a processor and/or might be implemented entirely in hardware or firmware circuitry. Similarly, many embodiments may not include input devices, output devices, or network interfaces.

With that prelude, as shown in Fig. 5, the device 500 may include a bus 505. The bus 505 includes one or more components that enable wired and/or wireless communication among the components of the device 500. The bus 505 may couple together two or more components of Fig. 5, such as via operative coupling, communicative coupling, electronic coupling, and/or electric coupling. Such components can include a processor 510 non-volatile storage 515, working memory (*e.g*., system dynamic random-access memory (DRAM)) 520, and/ or circuitry 525. In some cases, the system 500 can include human interface components 530 and/or a communication interface 535.

While these components are displayed as integrated within the device 500, it certain components might be located external from the device 500. As such, the device 500 might include, instead of or in addition to the components themselves, facilities for communicating with such external devices, which therefore can be considered part of the device 500 in some embodiments.

Merely by way of example, the non-volatile storage 515 can include a hard disk drive (HDD), a solid state drive (SSD), and/or any other form of persistent storage (*i.e*., storage that does not require power to maintain the state of the stored data). While such storage often is incorporated within the device 500 itself, such storage might be external to the device 500 and can include external HDD, SSD, flash drives, or the like, as well as networked storage (*e.g*., shared storage on a file server, etc.), storage on a storage area network (SAN), cloud-based storage, and/or the like. Unless the context dictates otherwise, any such storage can be considered part of the device 500 in accordance with various embodiments.

Similarly, the human interface 530 can include input components 540 and/or output components 545, which can be disposed within the device 500, external to the device 500, and/or combinations thereof. The input components 540 can enable the device 500 to receive input, such as user input and/or sensed input. For example, the input components 540 may include a touch screen, a keyboard, a keypad, a mouse, a button, a microphone, a switch, a sensor, a global positioning system sensor, an accelerometer, a gyroscope, and/or an actuator. In some cases, such components can be external to the device 500 and/or can communicate with components internal to the device 500 such as input jacks, USB ports, Bluetooth radios, and/ or the like. Similarly, the output component 545 can enable the device 500 to provide output, such as via a display, a printer, a speaker, and/or the like, any of which can be internal to the device 500 and/or external to the device but in communication with internal components, such as a USB port, a Bluetooth radio, a video port, and/or the like. Again, unless the context dictates otherwise, any such components can be considered part of the device 500 in accordance with various embodiments.

From these examples, it should be appreciated that various embodiments can support a variety of arrangements of external and/or internal components, all of which can be considered part of the device 500. In certain embodiments, some or all of these components might be virtualized; examples can include virtual machines, containers (such as Docker containers, etc.), cloud computing environments, platform as a service (PAAS) environments, and/or the like.

In an aspect, the nonvolatile storage 515 can be considered a non-transitory computer readable medium. In some embodiments, the nonvolatile storage 515 can be used to store software and/or data for use by the device 500. Such software/data can include an operating system 550, data 555, and/or instructions 560. The operating system can include instructions governing the basic operation of the device 500 and can include a variety of personal computer or server operating systems, embedded operating systems, and/or the like, depending on the nature of the device 500. The data 555 can include any of a variety of data used or produced by the device 500 (and/or the operation thereof), such as media content, databases, documents, and/or the like. The instructions 560 can include software code, such as applications, object code, assembly, binary, etc.) used to program the processor 510 to perform operations in accordance with various embodiments. In an aspect, the operating system 550 can be considered part of the instructions 560 in some embodiments.

The processor 510 can include one or more of a central processing unit, a graphics processing unit, a microprocessor, a controller, a microcontroller, a digital signal processor (DSP), programmable logic (such as a field-programmable gate array (FPGA) an erasable programmable logic device (EPLD), or the like), an application-specific integrated circuit (ASIC), a system on a chip (SoC) and/or another type of processing component. The processor 510 can be implemented in hardware, firmware, or a combination of hardware, firmware and/or software. In some implementations, the processor 510 includes one or more processors capable of being programmed to perform one or more operations or processes described elsewhere herein.

For example, In some embodiments, the device 500 can comprise logic 565. Such logic can be any sort of code, instructions, circuitry, or the like that can cause the device 500 to operate in accordance with the embodiments herein (*e.g*., to perform some or all of the processes and/or operations described herein). Merely by way of example, the logic 565 can include the instructions 560, which might be stored on the nonvolatile storage 515 as noted above, loaded into working memory 520, and/or executed by the processor 510 to perform operations and methods in accordance with various embodiments. In an aspect, these instructions 560 can be considered to be programming the processor 510 to operate according to such embodiments. In the same way, the operating system 550 (to the extent it is discrete from the instructions 560) might be stored on the nonvolatile storage 515, loaded into working memory 520, and/or executed by a processor 510.

Alternatively, and/or additionally, logic can include the circuitry 525 (*e.g*., hardware or firmware), which can operate independently of, or collaboratively with, any processor 510 the device 500 might or might not have. (As noted above, in some cases, the circuitry 550 itself can be considered a processor 510.) The circuitry 525 might be embodied by a chip, SoC, ASIC, programmable logic device (FPGA, EPLD, etc.), and/or the like. Thus, some or all of the logic enabling or causing the performance of some or all of the operations described herein might be encoded in hardware or firmware circuitry (*e.g*., circuitry 550) and executed directly by such circuitry, rather than being software instructions 560 loaded into working memory 520. (In some cases, this functionality can be embodied by hardware instructions). Thus, unless the context dictates otherwise, embodiments described herein are not limited to any specific combination of hardware, firmware, and/or software.

The device 500 can also include a communication interface 535, which can enable the device 500 to communicate with other devices via a wired (electrical and/or optical) connection and/or a wireless (RF) connection. For example, the communication interface 560 may include one or more RF subsystems (such a Bluetooth subsystem, such as those described above, for example, a Wi-Fi subsystem, a 5G or cellular subsystem, etc.). Additionally or alternatively Some such systems can be implemented in combination, as discrete chips, as SoCs, and/or the like. The communication interface 535 can further include a modem, a network interface card, and/or an antenna. In some cases, the communication interface 530 might comprise a plurality of I/O ports, each of which can be any facility that provides communication between the device 500 and other devices; in particular embodiments, such ports can network ports, such as Ethernet ports, fiber ports, etc. Other embodiments can include different types of I/O ports, such as serial ports, pinouts, and/or the like. Depending on the nature of the device 500, the communication interface 535 can include any standard or proprietary components to allow communication as described in accordance with various embodiments.

### Conclusion

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the implementations to the precise form disclosed. One skilled in the art will recognize that modifications may be made in light of the above disclosure or may be acquired from practice of the implementations, all of which can fall within the scope of various embodiments. For example, as noted above, the methods and processes described herein may be implemented using software components, firmware and/or hardware components, (including without limitation processors, other hardware circuitry, custom integrated circuits (ICs), programmable logic, etc.) and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods does not limit the implementations unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (*e.g*., if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim, the disclosure of various implementations includes each dependent claim in combination with every other claim in the claim set. No element, act, or instruction used herein should be construed as critical or essential unless explicitly described as such.

## Claims

1. A device, comprising:
circuitry to transmit, on a repeating, fixed schedule, a broadcast message for reception by a plurality of peripheral devices, the repeating, fixed schedule comprising a central communication window for the device to transmit and a plurality of peripheral communication windows for the plurality of peripheral devices to transmit; and
circuitry to receive, during the plurality of peripheral communication windows, response messages from one or more of the plurality of peripheral devices.

2. The device of claim 1, wherein the device further comprises circuitry to transmit the broadcast message using Bluetooth LE.

3. The device of any preceding claim, wherein the central communication window and each of the plurality of peripheral communication windows have an identical length.

4. The device of any preceding claim, wherein the broadcast message comprises a plurality of sub-messages, the plurality of sub-messages comprising a first sub-message for reception by a first peripheral device and a second sub-message for reception by a second peripheral device.

5. The device of any preceding claim, wherein the plurality of peripheral devices is a predetermined group of peripheral devices.

6. The device of claim 5, further comprising circuitry to remove a peripheral device from the predetermined group of peripheral devices, in partcicular in response to an event selected from a group consisting of:
the device receiving a message from the peripheral device requesting removal from the group; or
the device failing to receive a message from the peripheral device for a specified number of cycles of the repeating, fixed schedule.

7. The device of claim 6, further comprising circuitry to modify the repeating, fixed schedule to remove, from the repeating, fixed schedule, a peripheral communication window assigned to the peripheral device removed from the group.

8. The device of any preceding claim 5 to 7, further comprising: circuitry to encrypt the broadcast message with a first security key distributed to the group of peripheral devices.

9. The device of any preceding claim, wherein:
the broadcast message comprises a plurality of sub-messages, the plurality of sub-messages comprising a first sub-message for reception by a first peripheral device and a second sub-message for reception by a second peripheral device;
the device further comprises:
circuitry to encrypt the first sub-message with a second security key specific to the first peripheral device; and
circuitry to encrypt the second sub-message with a third security key specific to the second peripheral device.

10. The device of any preceding claim 5 to 9, further comprising circuitry to create the predetermined group of peripheral devices .

11. The device of claim 10, wherein the group is created based on a prior connection link between the central device and each of the plurality of peripheral devices.

12. The device of any preceding claim 5 to 11, further comprising circuitry to establish one or more communication parameters for the group of peripheral devices, the one or more communication parameters selected from the group consisting of:
a timing of each of the communication windows in the repeating, fixed schedule;
an order of the communication windows in the repeating, fixed schedule;
a maximum size of messages transmitted by the peripheral devices;
a shared security key for the group of peripheral devices; or
one or more individual security keys specific to individual peripheral devices.

13. The device of any preceding claim, wherein each of the communication windows in the repeating, fixed schedule is defined by a fixed length of time.

14. A device, comprising:
circuitry to listen for a broadcast message from a central device according to a repeating, fixed schedule, the repeating, fixed schedule comprising a central communication window for a central device and a plurality of peripheral communication windows for a plurality of peripheral devices;
circuitry to receive the broadcast message during the central communication window;
circuitry to extract a sub-message from the broadcast message;
circuitry to determine whether a message should be transmitted in response to the broadcast message; and
if a message should be transmitted for reception by the central device, circuitry to transmit the message during a specific one of the peripheral communication windows, wherein the specific one of the communication windows is assigned to the device.

15. A wireless system, comprising:
a central device, comprising:
circuitry to transmit, on a repeating, fixed schedule, a broadcast message for reception by a plurality of peripheral devices, the repeating, fixed schedule comprising a central communication window for the central device to transmit and a plurality of peripheral communication windows for the plurality of peripheral devices to transmit; and
circuitry to receive, during the plurality of peripheral communication windows, response messages from one or more of the plurality of peripheral devices according to the repeating, fixed schedule; and
the plurality of peripheral devices, each of the peripheral devices comprising:
circuitry to listen for the broadcast message during the central communication window;
circuitry to receive the broadcast message;
circuitry to extract a sub-message from the broadcast message.
circuitry to determine whether a message should be transmitted in response to the broadcast message; and
if a message should be transmitted in response to the broadcast message, circuitry to transmit the message during a peripheral communication window assigned to that peripheral device.
